# EUROPEAN PATENT SPECIFICATION

(11) **EP 0 525 263 B1**
(45) Date of publication and mention of the grant of the patent: **27.03.1996**
(21) Application number: 91307058.7
(22) Date of filing: 01.08.1991
(51) Int. Cl.: B29C 70/44

(54) **Vacuum-forming method and apparatus for vacuum-forming fibre reinforced resin composites**
Vakuumformung und Gegenstand zur Vakuumformung von faserverstärkte Harzverbundwerkstoffe
Procédé pour former sous vide et dispositif pour former sous vide des composites en résine renforcés de fibres

(43) Date of publication of application: 03.02.1993
(73) Proprietor: SCRIMP SYSTEMS, L.L.C., Warren, Rhode Island 02885 (US)
(72) Inventor: Seemann, William H., Pass Christian, Mississippi 39571 (US)
(74) Representative: Pilch, Adam John Michael

(56) References cited:
- EP-A- 0 348 831
- np-l-3
- np-l-5
- np-l-6
- FR-A- 2 605 929
- US-A- 4 902 215
- US-A- 4 942 013

## Description

This invention relates to transfer molding techniques, especially suited to molding fiber reinforced resin structures.

Fiber reinforced resin structures take many shapes and forms, e.g. as tubes or pipes employed, for example, in the chemical processing industry, and flat sheets and compound shapes as employed, for example, in boat building. In pipe constructions it is known to provide relatively thin coaxial radially spaced layers of resin reinforced fiber filaments with a plurality of core layers interposed between the resin reinforced fiber layers. In these structures the core layers provide sufficient wall dimension to withstand the external loads to which the pipe is subjected.

In the production of flat sheets and some compound shapes, either a wet lay-up technique used in which a resin "wetted" fiber reinforcement is laid upon a mold, and then cured, or a dry lay-up technique is used in which the dry fiber is placed upon a mold and then wetted by the resin. In either instance, after lay-up the resin is allowed to set and cure upon the mold to form the fiber reinforced resin composite structure. The apparatus, and/or process, used to make these structures varies considerably depending on the specific shape and form of the structure to be produced.

Vacuum bag techniques have been used in the past to form fiber reinforced plastic structures. In a vacuum bag technique, a flexible sheet, liner or bag is used to cover a single cavity mold which contains the dry or wet fiber lay up. In accordance with the former, the edges of the flexible sheet are clamped against the mold to form an envelope and seal the member, a catalyzed liquid plastic or resin is generally introduced into the envelope, or bag interior, to wet the fiber, and a vacuum is applied to the bag interior via a vacuum line to collapse the flexible sheet against the fiber and surface of the mold, while the plastic wetted fiber is pressed and cured to form the fiber reinforced plastic structure. Resin fumes from the process are prevented from escaping into the ambient work space.

Whereas the vacuum bag techniques are capable of providing fiberglass reinforced laminates of uniformity and strength, there nonetheless remains a need to further improve this system technique still further.

US Patent No US-A-4,902,215 discloses (cf. the preambles of claims 1 and 8) a technique for vacuum forming fiber-reinforced resin composites in which a resin distribution medium is positioned on one side of a lay-up of fiber reinforcement layers, providing resin-flow paths which improve the flow of the resin through and around the lay-up.

US Patent No US-A-4,942,013 describes a number of vacuum resin impregnation processes. In one such process, it is proposed to locate porous parting films and bleeding layers on both sides of the fiber reinforcement lay-up to improve resin flow which occurs substantially in a lateral direction across the plane of the mold.

The present invention seeks to provide a further improved apparatus and technique for the production of high strength fiber reinforced resin structures, especially fiberglass reinforced resin structures, having high reinforcement-to-resin ratios, and ranging in shape from flat to highly contoured.

In one aspect, the present invention provides a method of vacuum forming fiber-reinforced resin composites, which comprises laying up one or more layers of fiber reinforcement on a mold surface thereby forming a lay-up, placing a fluid impermeable flexible cover sheet over the lay-up, peripherally sealing the flexible cover sheet to the mold surface around the lay-up, injecting a curable resin into a mold cavity defined on one side by the mold surface and on the other by the fluid impermeable flexible cover sheet thereby to impregnate the lay-up with the resin, and allowing or causing the injected resin to cure whilst applying a vacuum to the mold cavity, thereby to draw the flexible cover sheet under vacuum towards the mold surface and to apply pressure to the composite during the curing process, wherein there is located in the mold cavity between the lay-up and the flexible cover sheet a resin distribution member providing a criss-crossing network of spaced-apart resin distribution channels and providing between the criss-crossing network of spaced-apart resin distribution channels a plurality of spacers which serve to space apart the lay-up from the flexible cover sheet,
wherein a second resin distribution member is provided between the lay-up and the mold surface, the second resin distribution member also providing a criss-crossing network of spaced-apart resin distribution channels and a plurality of spacers which serve to space apart the lay-up and the mold surface, that the mold surface has at least one resin distribution trough and a resin inlet for receiving and dispensing resin into the or each trough, and that the flexible cover sheet has at least one vacuum outlet arranged to be over the lay-up, the arrangement allowing the resin to flow continuously, freely and directly without gravity assistance to impregnate uniformly and fully the lay-up over its entire area from the location of resin introduction to the periphery of the lay-up.

In another aspect, the present invention provides apparatus for vacuum forming fiber-reinforced molded resin composites, comprising:
a mold providing a mold surface defining the desired shape of the molded composite;
a fluid impermeable flexible cover sheet positionable over the mold surface to define a mold cavity therebetween;
means for sealing the periphery of the flexible cover sheet to the mold surface to seal the mold cavity;
means for injecting a curable resin into the mold cavity for impregnation of a lay-up of fiber reinforcement when positioned in the mold cavity overlying the mold surface;
means for applying a vacuum to the mold cavity to draw the flexible cover sheet towards the molded surface and thereby apply pressure to the composite during molding and curing of the resin; and
a resin distribution member positionable in the mold cavity between the lay-up and the flexible cover sheet, and providing a criss-crossing network of spaced-apart resin distribution channels and an array of spacers serving to space the lay-up from the flexible cover sheet;
wherein
a second resin distribution member is positionable between the lay-up and the mold surface, the second resin distribution member also providing a criss-crossing network of spaced-apart resin distribution channels and a plurality of spacers which serve to space apart the lay-up and the mold surface;
the mold surface has at least one resin distribution trough and a resin inlet for receiving and dispensing resin into the or each trough; and
the vacuum applying means comprises at least one vacuum outlet in the flexible cover sheet and arranged to be over the lay-up, the arrangement allowing the resin to flow continuously, freely and directly without gravity assistance to impregnate uniformly and fully the lay-up over its entire area from the location of resin introduction to the periphery of the lay-up.

In accordance with this construction, a resin can be introduced into the chamber via the inlet, or inlets, in the mold, and a vacuum applied upon the chamber via the vacuum outlet, or outlets, located in the fluid impervious outer member or cover sheet, which will result in the resin being distributed across substantially the entire face at the entry side of the second resin distribution member, flowed substantially uniformly and continuously through the lay-up of woven or felted fiber, or fabric, and thence substantially uniformly, continuously and without interruption, passed therethrough to exit into the first resin distribution member and flow from the chamber via the vacuum outlet, or outlets, of the fluid impervious outer member or sheet.

This construction thus includes resin distribution on both sides of the lay-up of woven or felted fiber, or fabric; a first resin distribution medium located between the upper face of the lay-up and the fluid impervious outer sheet, and a second resin distribution medium located between the lower face of the lay-up and the mold surface. This dual sandwich type construction, on application of a vacuum, permits the resin to flow more freely, or with less resistance, continuously and even upwardly against gravity, to uniformly and fully impregnate the lay up. Very little resin is lost, or wasted, by withdrawal through the vacuum outlet, or outlets, and this system has proven admirably suited to the production of thick, large-in-area laminated structures ranging from flat to highly contoured. A feature of the dual sandwich type of construction is that the units can be staged, even vertically, one with another to produce laminated structures of which are quite thick, and cover very large areas.

The characteristics of a preferred apparatus, and technique for its use, as well as its principle of operation, will be more fully understood by reference to the following detailed description, and to the attached drawings to which reference is made in the description. The various features and components in the drawings are referred to by numbers, similar features and components being represented in the different views by similar numbers. Subscripts are used in some instances with numbers where there are duplicate features and components, or to describe a sub-feature or component of a larger assembly.

In the drawings:

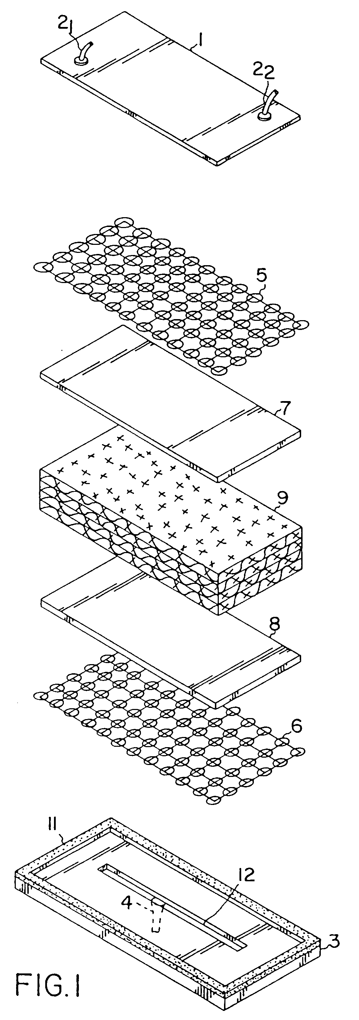

Figure 1 depicts an exploded view of a molding assembly of planar shape, the molding assembly including a fluid impervious rigid, or semi-rigid outer sheet provided with vacuum outlets, a lower rigid mold surface complete with a vacuum outlet against which the marginal edges of said outer sheet are sealed to form an inner chamber, a fiver lay up constituted of a plurality of layers of a dry fiber reinforcing fabric, two primary resin distribution mediums one of which is located between the lay up and the mold surface, and the other between the lay up and the fluid impervious outer sheet, and two peel plies one of which separates the lower face of the lay up and a primary distribution medium and the other the upper face of the lay up and a primary distribution medium.
Figure 2 depicts a section view of assembled mold, as described in the preceding figure.
Figure 3 depicts a close up isometric view, in partial section, of a segment of the molding assembly of Figures 1 and 2, showing particularly a resin distribution medium, as employed in the mold
Figure 4 depicts a second form of resin distribution medium per se; this resin distribution medium being also of a form preferred for use in the molding assembly depicted by reference to Figures 1 and 2.
Figure 5 depicts a cross-sectional view of a plurality of mold segments, staged one in conjunction with another, as used in the construction of a boat hull.

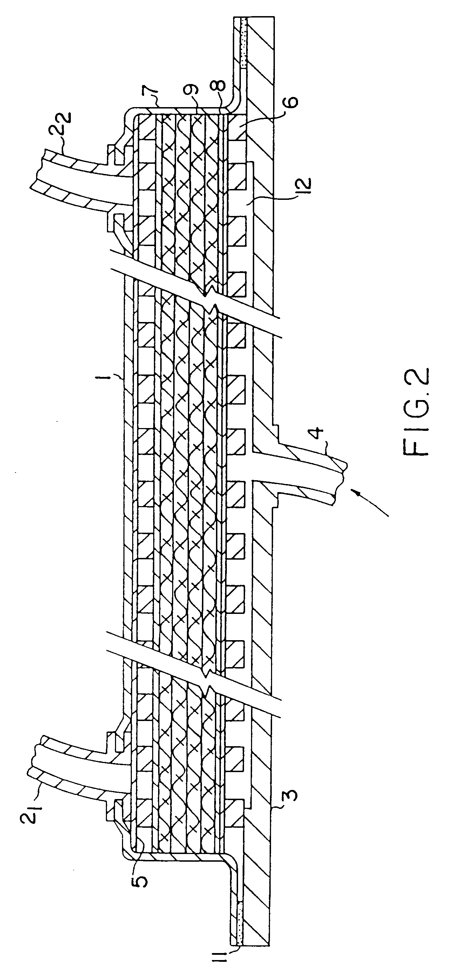

Referring first to Figures 1 and 2, there is shown a mold of planar design which has been found admirably suitable for the ready formation of fiber reinforced plastic structures of great strength, structures having physical qualities normally found in structures of corresponding fiber and resin composition molded and formed by a prepreg-autoclave process. In the mold, a fluid impervious outer sheet 1, provided with vacuum outlets 2₁, 2₂, is marginally sealed with an adhesive or tape 11 upon a mold surface 3, the space between the inside face of the outer sheet 1 and upper face of the mold surface 3 forming therebetween a chamber, or mold space. The outer sheet 1 is provided with vacuum outlets 2, and the mold surface 3 with an inlet 4 through which a resin, suitably a catalyzed resin, can be supplied to the chamber, or mold space. A secondary resin distribution channel 12 aids in the distribution of resin to the primary resin distribution medium 6. A vacuum drawn upon vacuum outlets 2 can thus exhaust the chamber, or mold space, of gas, and resin introduced into the chamber, or mold space, will be distributed via the secondary distribution medium 12 across the lower face of the primary resin distribution medium 6.

The chamber, or mold space, it will be observed, is provided with two primary resin distribution media, generally structurally identical, though not necessarily, one with the other, a first primary resin distribution medium 5 located between the upper face of a lay up 9 and the inside face of the fluid impervious outer sheet 1; the second primary resin distribution medium 6, as mentioned, lying between the lower face of the lay up and the mold surface 3. Optionally, and preferably as herein illustrated, the combination also includes a pervious membrane, perforated film or the like as a peel ply, i.e. a first peel ply 7 which physically separates the first primary resin distribution medium 5 from the upper face of the lay up 9, and a second peel ply 8, or resin pervious member, located between said second primary resin distribution medium 6 and lower face of the lay up 9 of woven or felted fiber, or fabric. Additionally, and preferably, as suggested, the combination also includes a secondary resin distribution medium 12 for more rapid distribution of the resin across the entry face of said second primary resin distribution medium. Pursuant to this unique structural combination of elements, particularly the primary resin distribution medium 6 which prevents closure between the lower face of the lay up 9 and mold surface 3, provides rapid dispersal of resin throughout said resin distribution medium 6 and application of resin over the entire lower face of the lay up 9, resin can be continuously passed upwardly through the primary resin distribution medium 6, peel ply 8, and into the lay up 9 or woven or felted fiber, or fabric. The resin, after uniformly wetting and impregnating the lay up 9 of woven or felted fiber, or fabric, due largely to the presence of the primary resin distribution medium 5 which prevents closure between the inner face of the fluid impervious outer sheet 1 and upper face of the lay up 9 to maintain uniform application of the vacuum across the face of this member -- and hence, it is functionally primarily a vacuum distribution member -- can then readily pass through the peel ply 7, primary resin distribution medium 5 out of the chamber, or mold space, via vacuum outlets 2 of the impervious outer sheet 1. As this readily observable phenomenon occurs, or begins to occur, the lay up of woven or felted fiber, or fabric, is generally completely, uniformly saturated with the resin.

In the present apparatus the combination on the alternate or opposite side of the lay up 9 of a second primary resin distribution medium 6, optionally a second peel ply 8, and also a secondary resin distribution means 12, preferably located in the inside face of the mold surface, enables the resin to flow more freely, continuously, and upwardly against the force of gravity, to fully and uniformly saturate the lay up of woven or felted fiber, or fabric. The satisfactory formation of larger area, thicker woven or felt fiber lay ups, is made possible by this improved structural combination. Moreover, structural units such as described by reference to these figures can be staged to further remove area limitations.
In the operation of a mold assembly as described by reference to Figures 1 and 2, in any event, a resin distribution medium 6 is laid upon the mold surface 3, and a peel ply 8 is placed on top of the resin distribution medium 6. A dry lay up 9 of one or a plurality of layers of a fabric, or fabrics, is then placed upon the upper face of the peel ply 8 within the confines of the mold chamber, and thereupon is placed a second peel ply 7, and second primary resin (or vacuum) distribution medium 5. The fluid impervious outer sheet 1 is then sealed against the marginal edges of the mold surface 3. Suction is then applied upon the mold interior, or mold cavity, and resin is introduced via resin inlet 4. The resin is dispersed from the point of initial introduction, in part through the secondary distribution channel 12 in the face of the mold surface 3, into the primary resin distribution medium 6, via the channels therein to the very outer edges of said resin distribution medium 6, the resin flowing vertically upwardly over the whole area of the primary distribution medium 6 to percolate upwardly through the layers of fabric. The impervious outer sheet 1, as a result of the applied vacuum, is drawn downwardly over its entire area against the upper disposed primary resin (or vacuum) distribution medium 5, and entire upper face of the mold, the layers of fabric being thereby compressed.

The resin flows freely upwardly through the layers of fabric, the second peel ply 7 and second primary resin (or vacuum) distribution medium 5 to the vacuum outlets 2. The resin supply to the resin in let 4 is then cut off and the resin impregnated fabric is cured.

After the resin has cured, the vacuum pulled upon the mold chamber via vacuum inlet 2 is cut off, and the impervious outer sheet 1, primary resin (or vacuum) distribution medium 5, and peel ply 7 are peeled from the flat, compact, fiber reinforced plastic structure. The peel ply 7 facilitates removal of the impervious outer sheet 1 and primary resin (or vacuum) distribution member 5, leaving the face of the flat, compact, fiber reinforced plastic structure from which these layers have been peeled a surface which is conditioned for the acceptance of a paint or other type of coating, if desired. The primary resin distribution medium 6 and peel ply 8 are similarly stripped from the opposite face of the cured lay up, after removal of these components from the mold surface 3. Without the presence of the peel plies 7, 8 the surfaces from which these members are removed is very smooth and must be sanded, or otherwise surface abraded if a paint or other type coating is to be applied.

The resin entering the mold chamber via the resin inlet 4, by virtue of the primary resin distribution medium 6 and primary resin (or vacuum) distribution medium 5 flows continuously and without interruption via the open continuous network of passageways from the point of entry into the distribution medium 6 to the marginal edges of the resin distribution medium 6, and thence upwardly over substantially the entire face through the lay up of one or more layers of reinforcing fabric, e.g., felted glass fibers or woven glass fabric. In contrast, but for the presence of the resin distribution media, the resin entering the mold chamber would, even after many hours, and with the constant assistance of squeegeeing and massaging the outer surface of the impervious outer sheet, spread only slowly outwardly from the point of entry over the surface of the reinforcing fabric, some of the resin penetrating the reinforcing fabric leaving behind areas which are dry, or inadequately wetted by the resin. In such event, channeling occurs, forming after curing, a fiber reinforced plastic structure having a relatively low reinforcing fiber-to-resin ratio, and overall non-uniform structure of generally low quality. Vacuum pressure would be lost in areas where the resin seals. Furthermore, under these conditions one would not be able to maintain the vacuum on the laminate in the areas between the outer edge of the resin advance and the resin inlet port, this resulting in a loss of pressure on the laminate and reduced contact between the fiber and resin in these areas.

The primary resin distribution media 5, 6 per se are constituted of spaced-apart strands, or lines, running crisscross one with another, and an open array of separated raised segments providing vertically oriented spaced-apart props, or pillars, and spaced lateral openings between said props, or pillars, which provides a vast array of locations which support the fluid impervious outer sheet 1, or lay up 9 upon the face of the mold surface 3 and, at these locations, prevent direct contact (or closure) between said outer sheet 1 or mold surface 3 and the outer surface of said layer or layers of fabric, while the resin introduced into the chamber flows through the lateral openings of the distribution medium to the outer edges thereof for distribution upon or to or from the outer faces of said layer or layers of fabric which become readily uniformly impregnated with the resin when a vacuum is applied, and resin in introduced via the resin inlet to the chamber.

The strands, or lines of which the resin distribution medium are constructed are preferably constituted of plastic monofilaments which are non-resin absorptive. In one form, the lines of the resin distribution medium are spaced apart and cross at right angles one to another, and beads, posts, or pillars of substantially uniform dimensions are located on a side of the structure where the lines cross. The resin distribution in another of its forms is one wherein the lines are of sufficient thickness that they form intersecting slats which act as pillars between which lateral openings are provided to act as conduits for transport of the resin. In yet another of its forms, the resin distribution can be constructed as a knitted, or woven fabric, separated segments of which are raised to form pillars, or rows of pillars, and spaces therebetween forming lateral channels through which resin can flow freely when the resin distribution medium is in place separating the outer impervious sheet and the lay up of fiber, or fabric, supported on the mold surface.

In all of these embodiments, the resin distribution medium is designed to prevent closure between the inner face of said impervious outer flexible or semi-flexible sheet and upper surface of the lay up of fabric, or between the mold surface and lower face of the lay up of fabric. Due to its open pillar-like structure, and the continuous network of lateral openings lying between these pillars, a continuous network of passageways in all directions is provided from the point of entry of the resin, or fluid plastic, over the whole area of the distribution medium. Consequently, when a vacuum is drawn upon the mold, resin introduced, and the impervious outer sheet is collapsed inwardly upon the fibrous material, or mold surface, the resin introduced into the mold will flow quite rapidly, continuously and without interruption via the network of passageways from the point of entry, or resin inlet, to the outer marginal edges of the distribution medium, and from there into the mold space over substantially the entire area of the distribution medium through the fabric lying thereover to virtually completely saturate the one or more layers of fabric with the resin. The fabric lay up on the mold is substantially uniformly wetted by the fluid plastic, or resin, and the resin (or vacuum) distribution medium is simultaneously tightly pressed by the collapsed impervious outer sheet, and the former directly pressed against the upper face of the fabric, while the resin is cured to form the fiber reinforced plastic structure.

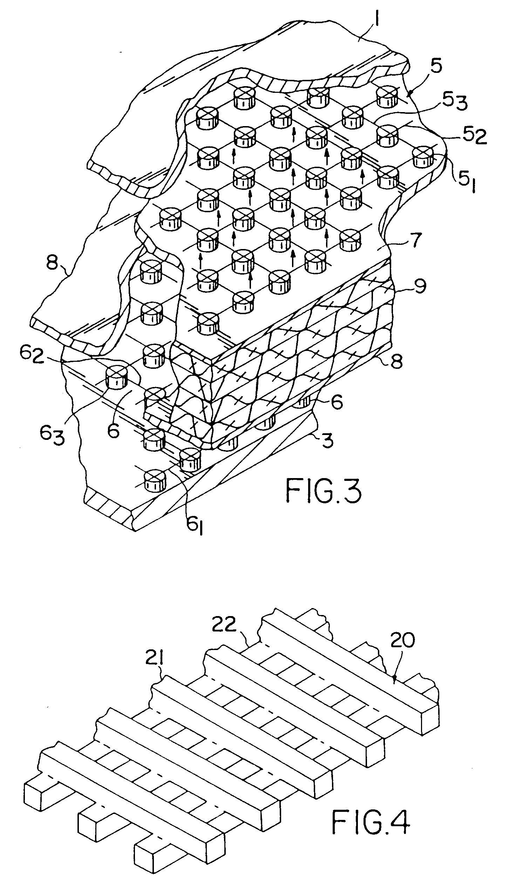

Specific reference is made to Figure 3 which shows in better detail a preferred primary resin distribution medium 5, more generally represented in Figures 1 and 2. Primary resin (or vacuum) distribution medium 6 is structurally identical to primary resin distribution medium 5, albeit each serves a somewhat different function in the overall combination. Thus, as indicated, the function of primary resin (or vacuum) distribution medium 5 is to distribute the applied vacuum uniformaly across the upper face of the peel ply 7 and lay up 9, and prevent the vacuum from being sealed off by the resin. The function of primary resin distribution medium 6, on the other hand, is to distribute the resin rapidly uniformly across the lower face of the lay up 9 for the rapid and uniform penetration thereof. The primary resin (or vacuum) distribution medium 5, as will be observed, lies directly under and in direct contact with the impervious outer sheet 1. It is constituted of an open network of non swelling, non resin absorptive monofilaments, a first set of spaced apart parallelly aligned monofilaments 5₂ horizontally aligned one with respect to the other, and a second set of spaced apart parallelly aligned monofilaments 5₃ vertically aligned one with respect to the other. The sets of monofilaments 5₂, 5₃ respectfully, are laid to intersect one set with the other at generally right angles, the points of contact being adhered one to the other to form an open mesh-like structure, or network, of contiguous parallelograms, or squares. At each of the intersections where the monofilaments 5₂, 5₃ cross, there is provided a bead, post, pillar or pillar-like member 5₁ of substantially equal length the upper end of which is adhered to the lower face of the crossed monofilaments 5₂, 5₃, while the lower end thereof is projected substantially downwardly, or perpendicular to the plane formed by the open mesh structure. The cylindrical shaped posts 5₁ are thus substantially equally spaced apart in any given direction, the upper ends of each pressing against the inner face of impervious outer sheet 1, while the lower terminal ends of each rest atop the optionally supplied peel ply 7 which lies across the upper face of the top ply of the lay up 9 of woven fiber, or felt, e.g., a glass fabric. The primary resin distribution medium 6, on the other hand, is constituted of structural elements 6₁, 6₂, 6₃ corresponding to structural elements 5₁, 5₂ and 5₃ of the primary resin (or vacuum) distribution medium 5. The posts 6₁ support the open Structure formed by the monofilaments 6₂, 6₃ on top of which rests peel ply 8. The lower ends of ports 6₁ in turn rest upon the mold surface 3, and prevents closure of the mold face 3 with the lower face of peel ply 8, or lay up 9. When a vacuum is applied upon the composite structure, the outer impervious sheet 1 will be pressed down very tightly against the resin (or vacuum) distribution medium 5, while supported by the posts 5₁ to provide a continuous network of open passageways between the inner face of the outer impervious sheet 1 and upper face of the peel ply 7; or upper face of the top ply of fabric 9 if the peel ply 7 is not present. An applied vacuum will be uniformly applied throughout the resin (or vacuum) distribution medium 5. Consequently, a liquid plastic or resin introduced via the resin inlet 4 into the primary resin distribution medium 6, and applied uniformly across the lover face of lay up 9, on application of a vacuum, will readily pass upwardly through the openings of the resin distribution medium 6 flowing virtually without obstruction through said lay up 9. Virtually the entire area of the resin distribution medium 6 between the posts 6₁ will thus be filled with the liquid plastic, or resin, from where the resin will pass, or percolate, directly outwardly and upwardly through the ply or plies to substantially completely, uniformly "wet" fabric lay up 9. Once the vacuum is applied, and the flow of resin via line 4 to the system initiated, the resin will flow without interruption, and without any squeeging or massaging of the outer sheet 1 by an operative. The applied vacuum constitutes the only driving force for the resin and, so long as it persists even though the vacuum pump is cut off, the resin will continue to flow without the aid or attendance of an operative.

A second form of the resin distribution medium is described by reference to Figure 4. Referring to Figure 4 there is shown a grid-like structure 20 constituted of two sets of spaced-apart parallel aligned strips, a first set of strips 21 and a second set of strips 22 running at right angles with the first set of strips. The structure 20, substituted for one or both of the structure 5 or 6 in the mold assembly described by reference to Figures 1-3, thus provides an open network of pillar-like components for (A) propping up and supporting the impervious outer sheet 1 at a level above the peel ply 7, or upper face of the top ply of fabric 9 if the peel ply 7 is not present, or (B) propping up and supporting the peel ply 8 and lay up 9, or lay up 9 if the peel ply 8 is not present, while simultaneously providing a network of continuous openings for uniform application of a vacuum, or the passage and continuous distribution of the resin from the point of inlet 4 to the marginal edges of said resin distribution medium 6, and passage through the lay up 9. For example, resin, on application of a vacuum, would thus flow upwardly from inlet 4 into the laterally aligned openings between upper strips 21, the upper surfaces of which would, e.g., be in direct contact with the lower face of peel ply 8, or lay up 9 if peel ply 8 were not present, into the upwardly vertically faced openings between strips 21, 22. From therein, the resin would flow laterally between the parallel aligned channels between strips 22, the bottom faces of which rest upon mold surface 3, to the marginal edges of said distribution medium 20. The resin, substantially uniformly distributed across the lower face of the peel ply 8, or lower face of fabric 9 if the peel ply were not present, would then percolate upwardly through the layer, or layers of fabric 9.

The primary resin distribution systems described above are presently preferred but many other equivalent structures will equally serve the purposes of the present invention. One such structure comprises a fabric knitted or woven from a non-swelling, non-resin absorptive monofilament, which fabric provides at spaced locations throughout the fabric areas of locally increased bulk which act as spacers to space the layer or layers of resin impregnated fibre reinforcement from respectively the mould surface and the cover sheet.

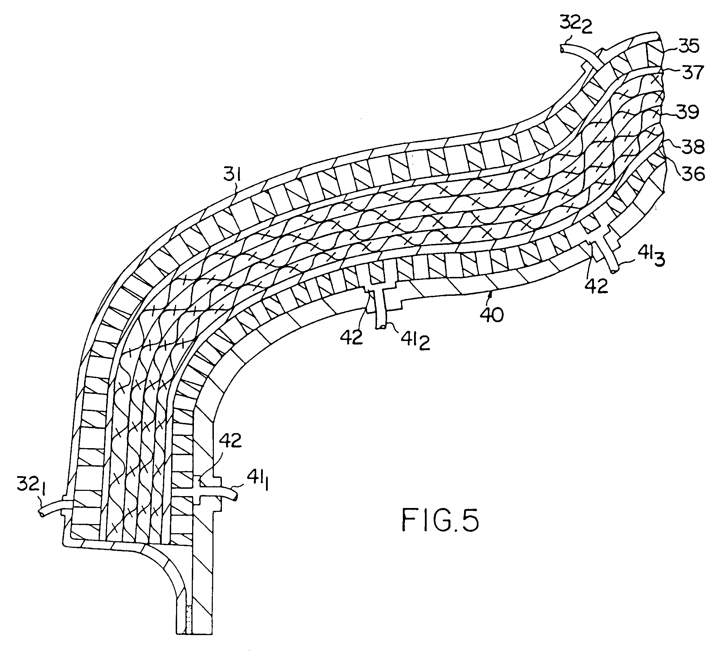

Reference is now made to Figure 5 showing a plurality of staged units as used in the construction of a large boat hull. This figure shows, for purposes of illustration, one-half of a boat hull (a contiguous like assembly constituting its mirror image), the fore and aft sections being omitted, to simplify the drawing. The figure illustrates generally a mold surface 40, in this instance a male mold within which is provided a plurality of staged spaced apart resin inlets 41₁, 26 41₂, 41₃ through each of which resin can be individually supplied from a supply source to the mold surface. The outside face, or mold support surface, is provided with grooves 42, or surface indentations, which act as a secondary resin distribution medium to supply resin to the area which surrounds the points of resin entry. In setting up the assembly for use, a primary resin distribution medium 36 is first laid in place upon the mold surface 40, and thereover is placed a peel ply 38. A lay up 39 comprised of one or more plies of woven or felted fibers, or fabric, is then placed atop the peel ply 38. Over the lay up 39 there is placed a second peel ply, perforated or resin pervious film 37, and thereover is laid a second primary resin distribution medium 35. This assembly is then covered by a fluid impervious outer sheet 31 provided with vacuum outlets 32₁, 32₂, the contour of which corresponds with that of the mold surface 40. The sheet 31 when fixed in place and the edges (not shown) sealed completely covers the various layers supported upon the mold surface 40 and provides a contiguous chamber, or mold space, upon which a vacuum can be drawn, and to which a resin can be supplied. Resin supplied via the resin inlets 41₁, 41₂, 41₃ thus spreads laterally outwardly, and moves upwardly upon the mold surface via means of the secondary resin distribution medium 42 and, especially, the primary distribution medium 36 covering its entire surface from which it is directed uniformly outwardly and upwardly through the peel ply 38 and lay up 39. The resin, due to the presence of the primary resin distribution medium 36, and primary resin (or vacuum) distribution medium 35, flows continuously through and thoroughly wets the lay up 39 moving to the vacuum outlets 32₁, 32₂ at which time the flow of resin to the resin inlets 41₁, 41₂, 41₃ is cut off. The resin is then cured. The outer plies constituting the impervious outer sheet 31, primary resin distribution medium 35 and peel ply 37 are then peeled away from the fiber reinforced resin composite hull. The composite hull is then removed from the mold surface 40, and the plies constituted of the peel ply 38, primary resin distribution medium 36 then peeled from the opposite face of the hull.

The same concept is applicable to the formaation of a fiber reinforced resin composite hull in use of a female mold. In this instance, the opposite, or inside face of the mold 40 provides the surface upon which the primary resin distribution media 35, 36, peel plies 37, 38 and lay up 39 are placed, and over which the contoured fluid impervious outer sheet 31 is provided as a cover.

After assembly of the components needed to form the laminate, a very large area fiber reinforced resin composite, ranging from flat to highly contoured, can be readily formed by careful control of the applied vacuum, and timing of the resin injection, so that a resin can "climb" even a vertical laminate and progressively gelled as the process proceeds. Laminated structures of thicknesses ranging from about 1/32" to 4" (0.8 to 102mm) and greater, which have great strength, can be readily formed pursuant to the practice of this invention. Moreover, laminated structures having surface areas, ranging from flat to highly contoured, of areas ranging from about 1 to 5000 sq. ft. (0.1 to 465m²) and greater, can be readily formed pursuant to the practice of this invention.

The following non-limiting examples are further illustrative of this invention.

The technique described herein has proven itself well suited to the production of laminar composites of very large surface area, and thickness, ranging from flat to highly contoured, and which were not previously available. For example, the technique of this invention makes it feasible to mold panels of area many times larger than 8' x 16' (2.4m x 4.5m) which was about the maximum size previously available.

### Example 1

A laminated sheet constituted of fiberglass and vinyl resin was made pursuant to the technique described by reference to Figures 1-3 by injecting a 3000 ozs/yd² (101kg/m²) of E type fiberglass fabric. The finished laminate thickness was 2.7 inches (6.9cms) or 0.0009" (0.02mm) per ounce (28.35g) of fabric. This compares to an average thickness per ounce (28.35g) of fabric of .0015" (0.038mm) for hand layed fabric. The hand layed laminate has a reinforcement/resin ratio of 50% by weight and the laminate made by the process, and apparatus of this invention, has a reinforcement/resin ratio of 75% by weight. Resin flow is estimated to be approximately double the rate attainable by the earlier process, and apparatus.

### Example 2

A section of a 50' (15m) boat hull was built to simulate the injection of a part of that size. Three resin inlets and distribution channels were placed in the mold section spaced equally in the vertical direction with the distribution channels running horizontally at the same level as the inlet ports. Vacuum ports were placed only on the top (simulated keel) and at the bottom (simulated gunwale) of the mold to create an injection scenario to mimic the full size hull. Resin was injected into the bottommost port first, allowed to flow through the laminate until it was visually observed to be at the level of the second port, the first port was closed off, and the second was opened. This sequence was repeated when the resin was observed to reach the second port when the second port closed and the third opened. When the resin reached the keel, the topmost port was closed and the injection was complete.

The laminate was allowed to cure and was stripped from the mold. Measurements were made at different vertical positions to determine the thickness of the laminate. No significant thickness variations were observed, proving that the staged resin injection maintained a consistent vacuum pressure over the entire vertical distance of the hull section. The thickness measurements indicated that the reinforcement/resin ratio was in the 70%-75% range. The quality of the laminate was observed to be good in all respects except that neither surface of the laminate had a smooth gel-coated surface. However, this is not considered to be an important factor in the production of an extremely large hull, given the other significant advantages provided by the process, and apparatus of the present invention, to wit:
High strength to weight ratios;
Low void content laminates;
Low vapor emissions; and
Low cost molds.

### Example 3

A demonstration part is being built as part of a project to replace all aluminum structural system in an external fuel tank for aerospace use.

The part embodies a carbon fiber/epoxy rib stiffened circular structural member. This part is normally extremely difficult to build because there are many small integral hat type stiffeners on this part which must be molded at the same time as the rest of the part. Placing the inlet ports in the vacuum film and the pervious conduit over the part proved to be extremely difficult as the hat type stiffeners tended to be easily moved out of place while arranging the resin inlets and the pervious conduits. The solution to the problem is provided by the process, and apparatus, of this invention in that the resin inlet and the pervious conduit are part of the mold and the vacuum film need not be fitted with resin inlets and pervious conduits.

The process, and apparatus, of this invention is working well on this project and initial parts have been made with aerospace quality and fiber contents. Final parts are expected to have fiber contents in the 60% by volume range, which is as good as is achieved by other aerospace fabrication techniques, including the much more expensive prepreg-autoclave techniques.

The process, and apparatus, of this invention offers several distinct advantages:
a. In building precise parts which have difficult molding features, such as molded in structural ribs, etc., having to fit the resin inlet and the pervious conduit into the impervious outer sheet over the part on the mold can be extremely difficult and in some cases virtually impossible without disturbing the precise placement of dry reinforcements and rib cores and the like. In these cases, having the resin inlet and the resin conduit permanently built into the mold can make the construction of these precise parts possible.
b. In building very large parts, such as a large boat hull, placing the resin inlet and the pervious conduit in the vacuum film, has distinct physical difficulties. Special staging may have to be built in order to reach all areas of the piece that is being built without damaging the vacuum film or disturbing the placement of the dry reinforcement. Furthermore, holding the pervious conduit in proper alignment also presents difficulties when working over a very large area. Having the resin inlet and the pervious conduit permanently built into the mold eliminates these problems.
c. In building very large parts, such as a large boat hull, the resin may have to travel vertically for some distance, in some cases for 20 to 30 feet or more (6 to 9m). Unless some special provision is made for this, the vacuum pressures on the laminate will vary greatly over the vertical areas of the hull. If the distance to be traveled is greater than some specific amount (depending upon the viscosity of the resin this will be less than 33 feet (10m), the theoretical maximum for vacuum lift) the resin will not flow at all. This problem is solved by staging the resin input which is done by arranging resin inlets and conduits at some convenient interval, say every 3 feet (0.9m) and injecting the resin one level at a time. The resin may also be staged in curing so that lower levels cure before the upper levels are injected. Using this procedure, very large hulls may be injected and the vacuum pressure on the laminate may be maintained within acceptable limits in all parts of the laminate. Having the resin inlets and conduits permanently as part of the mold facilitates this procedure greatly as the placement will be precise and always the same hull after hull.
d. The progress of the resin injection is easier to monitor. In the earlier process the resin is injected over the surface of the laminate ad then percolates through the reinforcement to thoroughly wet the reinforcement all the way to the mold surface. In the present process the resin is injected at the mold surface and then percolates outward to the surface. When the resin reaches the surface, all the reinforcement has been wet and the injection is completed. The point at which the injection is complete is far easier to monitor inasmuch as the progress of the resin can be monitored visually.
e. The location of leaks in the impervious outer sheet are easier to find. In the earlier process leaks in the outer sheet may be located by observing small air bubbles in the resin as it travels through the primary distribution medium. This is no problem with small parts as close visual inspection is easy. However, large parts are more difficult to monitor, as the entire area must be closely examined by a trained eye. In this process the presence of a vacuum leak is shown by an area of the reinforcement which does not wet with the resin. The presence of such an area is quickly noticeable by even a casual observer and can be easily repaired.

The fiber-to-resin ratios of the very high strength materials made pursuant to the practice of this invention compare favorably with panels of similar construction made by prepreg-autoclave techniques, and contain two times the fiber-to-resin ratios of panels made by most known transfer molding techniques.

The viscosities of resins which have been successfully employed in accordance with the invention described herein ranges from about 200 cps to about 1000 cps (0.2 to Pa.s) and higher viscosity resins can be employed though the process cycle may be increased.

The techniques described herein are capable of some variations without departing the scope of this invention, as will be apparent to those of skill in this art.

Fibrous reinforcing materials per se are well known, and a numerous range of such materials can be used in accordance with this invention. Such materials include, e.g., glass, aramid, graphite boron fiber and the like. The same is true of resins and include, i.e., epoxy, polyester, vinylesters and the like.

## Claims

1. A method of vacuum forming fiber-reinforced resin composites, which comprises laying up one or more layers of fiber reinforcement on a mold surface (3) thereby forming a lay-up (9), placing a fluid impermeable flexible cover sheet (1) over the lay-up (9), peripherally sealing the flexible cover sheet (1) to the mold surface (3) around the lay-up (9), injecting a curable resin into a mold cavity defined on one side by the mold surface (3) and on the other by the fluid impermeable flexible cover sheet (1) thereby to impregnate the lay-up (9) with the resin, and allowing or causing the injected resin to cure whilst applying a vacuum to the mold cavity, thereby to draw the flexible cover sheet (1) under vacuum towards the mold surface (3) and to apply pressure to the composite during the curing process, wherein there is located in the mold cavity between the lay-up (9) and the flexible cover sheet (1) a resin distribution member (5) providing a criss-crossing network of spaced-apart resin distribution channels and providing between the criss-crossing network of spaced-apart resin distribution channels a plurality of spacers which serve to space apart the lay-up (9) from the flexible cover sheet (1),
characterised in that a second resin distribution member (6) is provided between the lay-up (9) and the mold surface (3), the second resin distribution member (6) also providing a criss-crossing network of spaced-apart resin distribution channels and a plurality of spacers which serve to space apart the lay-up (9) and the mold surface (3), that the mold surface (3) has at least one resin distribution trough (12; 42) and a resin inlet (4) for receiving and dispensing resin into the or each trough (12; 42), and that the flexible cover sheet (1) has at least one vacuum outlet (2) arranged to be over the lay-up (9), the arrangement allowing the resin to flow continuously, freely and directly without gravity assistance to impregnate uniformly and fully the lay-up (9) over its entire area from the location of resin introduction to the periphery of the lay-up (9).

2. A method according to claim 1, wherein each of the resin distribution members (5, 6) is constituted by an open network of intersecting, non-swelling, non-resin absorptive monofilaments arranged in two intersecting parallel sets (5₂, 5₃; 6₂, 6₃), each defining a parallel set of resin distribution channels between the monofilaments, there being provided at each intersection of said monofilaments a raised pillar (5₁; 6₁), which pillars serve to space apart the upper or lower surface, as the case may be, of the lay-up (9) from the flexible cover sheet (1) or the mold surface (3).

3. A method according to claim 1, wherein each of the resin distribution members (5, 6) is constituted by a grid-like structure (20) consisting of two sets of parallel slats (21, 22) of a non-swelling, non-resin absorptive material superimposed one on top of the other to form a grid, the slats (21, 22) of each set being spaced one from the other to form therebetween a parallel set of resin distribution channels.

4. A method according to claim 2 or claim 3, wherein the parallel sets of resin distribution channels intersect one another substantially at right angles.

5. A method according to claim 1, wherein the resin distribution members (5, 6) each comprise a fabric knitted or woven from a non-swelling, non-resin absorptive monofilament, the said spacers being constituted by areas of locally increased bulk in the knitted or woven fabric.

6. A method according to any one of claims 1 to 5, wherein a flexible sheet of resin permeable material is positioned between the lay-up (9) and the resin distribution member (5, 6) on one or both sides of the lay-up (9) to provide a peelable ply (7, 8) on one or both sides of the molded composite, and wherein at the end of the molding process, and upon removal of the molded composite from the mold, that peelable ply (7, 8) is peeled from one or both sides of the composite, as the case may be.

7. A method according to any one of claims 1 to 6, wherein the fiber-reinforced resin composite is all or part of a boat hull.

8. Apparatus for vacuum forming fiber-reinforced molded resin composites, comprising:
a mold providing a mold surface (3) defining the desired shape of the molded composite;
a fluid impermeable flexible cover sheet (1) positionable over the mold surface (3) to define a mold cavity therebetween;
means (11) for sealing the periphery of the flexible cover sheet (1) to the mold surface (3) to seal the mold cavity;
means (4) for injecting a curable resin into the mold cavity for impregnation of a lay-up (9) of fiber reinforcement when positioned in the mold cavity overlying the mold surface (3);
means (2) for applying a vacuum to the mold cavity to draw the flexible cover sheet (1) towards the molded surface and thereby apply pressure to the composite during molding and curing of the resin; and
a resin distribution member (5) positionable in the mold cavity between the lay-up (9) and the flexible cover sheet (1), and providing a criss-crossing network of spaced-apart resin distribution channels and an array of spacers serving to space the lay-up (9) from the flexible cover sheet (1);
characterised in that:
a second resin distribution member (6) is positionable between the lay-up (9) and the mold surface (3), the second resin distribution member (6) also providing a criss-crossing network of spaced-apart resin distribution channels and a plurality of spacers which serve to space apart the lay-up (9) and the mold surface (3);
the mold surface (3) has at least one resin distribution trough (12; 42) and a resin inlet (4) for receiving and dispensing resin into the or each trough (12; 42); and
the vacuum applying means comprises at least one vacuum outlet (2) in the flexible cover sheet (1) and arranged to be over the lay-up (9), the arrangement allowing the resin to flow continuously, freely and directly without gravity assistance to impregnate uniformly and fully the lay-up (9) over its entire area from the location of resin introduction to the periphery of the lay-up (9).

9. Apparatus according to claim 8, wherein each of the resin distribution members (5, 6) is constituted by an open network of intersecting, non-swelling, non-resin absorptive monofilaments arranged in two intersecting parallel sets (5₂, 5₃; 6₂, 6₃), each defining a parallel set of resin distribution channels between the monofilaments, there being provided at each intersection of said monofilaments a raised pillar (5₁; 6₁), which pillars serve to space apart the upper or lower surface, as the case may be, of the lay-up (9) from the flexible cover sheet (1) or the mold surface (3).

10. Apparatus according to claim 8, wherein each of the resin distribution members (5, 6) is constituted by a grid-like structure (20) consisting of two sets of parallel slats (21, 22) of a non-swelling, non-resin absorptive material superimposed one on top of the other to form a grid, the slats (21, 22) of each set being spaced one from the other to form therebetween a parallel set of resin distribution channels.

11. Apparatus according to claim 9 or claim 10, wherein the parallel sets of resin distribution channels intersect one another substantially at right angles.

12. Apparatus according to claim 8, wherein the resin distribution members (5, 6) each comprise a fabric knitted or woven from a non-swelling, non-resin absorptive monofilament, the said spacers being constituted by areas of locally increased bulk in the knitted or woven fabric.

13. Apparatus according to any one of claims 8 to 12, which additionally comprises at least one and preferably two sheets (7, 8) of resin permeable material positionable in the mold cavity between the lay-up (9) and one or both resin distribution members (5, 6), the sheets (7, 8) of resin permeable material being of a material which is peelable from the surface of the molded composite at the end of the molding process.

14. Apparatus according to any one of claims 8 to 13, wherein the mold cavity defines all or part of a boat hull.

## Patentansprüche

1. Verfahren zur Vakuumherstellung von faserverstärkten Harzverbundwerkstücken, bei dem man eine oder mehrere Schichten von Faserverstärkung auf einer Formoberfläche (3) auflegt und dabei eine Auflage (9) bildet, einen fließmittelundurchlässigen flexiblen Deckbogen (1) über der Auflage (9) anordnet, am Umfang den flexiblen Deckbogen (1) gegen die Formoberfläche (3) um die Auflage (9) herum abdichtet, ein härtbares Harz in eine Formhöhlung einspritzt, die auf einer Seite von der Formoberfläche (3) und auf der anderen Seite von dem fließmittelundurchlässigen flexiben Deckbogen (1) begrenzt ist, und dabei die Auflage (9) mit dem Harz imprägniert und das eingespritzte Harz härten läßt oder eine solche Härtung bewirkt, während man ein Vakuum an die Formhöhlung anlegt, um dabei den flexiblen Deckbogen (1) unter Vakuum zu der Formoberfläche (3) zu ziehen und Druck auf das Verbundwerkstück während des Härtungsverfahrens auszuüben, wobei in der Formhöhlung zwischen der Auflage (9) und dem flexiblen Deckbogen (1) ein Harzverteilungsteil (5) angeordnet ist, das ein sich kreuzendes Netz von in Abstand voneinander angeordneten Harzverteilungskanälen liefert und zwischen dem sich kreuzenden Netz von im Abstand angeordneten Harzverteilungskanälen mehrere Abstandshalter liefert, die dazu dienen, die Auflage (9) im Abstand von dem flexiblen Deckbogen (1) zu halten, **dadurch gekennzeichnet**, daß ein zweites Harzverteilungsteil (6) zwischen der Auflage (9) und der Formoberfläche (3) vorgesehen ist, wobei das zweite Harzverteilungsteil (6) auch ein sich kreuzendes Netz von im Abstand voneinander angeordneten Harzverteilungskanälen und mehrere Abstandshalter liefert, die dazu dienen, die Auflage (9) und die Formoberfläche (3) im Abstand voneinander zu halten, daß die Formoberfläche (3) wenigstens einen Harzverteilungstrog (12'; 42) und einen Harzeinlaß (4) für die Aufnahme und Abgabe von Harz in den oder jeden Trog (12'; 42) hat und daß der flexible Deckbogen (1) wenigstens einen Vakuumauslaß (2) hat, der so angeordnet ist, daß er über der Auflage (9) ist, wobei die Anordnung es erlaubt, daß das Harz kontinuierlich, frei und direkt ohne Schwerkraftunterstützung fließt, um die Auflage (9) über ihrer gesamten Fläche von der Stelle der Harzeinführung zum Umfang der Auflage (9) hin zu imprägnieren.

2. Verfahren nach Anspruch 1, bei dem jedes der Harzverteilungsteile (5, 6) von einem offenen Netz einander schneidender, nichtquellender, nichtharzabsorbierender Monofilamente gebildet wird, die in zwei einander schneidenden parallelen Sätzen (5₂, 5₃; 6₂, 6₃) angeordnet sind, wobei jeder einen parallelen Satz von Harzverteilungskanälen zwischen den Monofilamenten begrenzt und wobei an jeder Schnittstelle dieser Monofilamente ein sich erhebender Pfeiler (5₁; 6₁) vorgesehen ist und wobei diese Pfeiler dazu dienen, je nachdem die obere oder untere Oberfläche der Auflage (9) im Abstand von dem flexiblen Deckbogen (1) oder der Formoberfläche (3) zu halten.

3. Verfahren nach Anspruch 1, bei dem jedes der Harzverteilungsteile (5, 6) von einer gitterartigen Struktur (20) gebildet wird, die aus zwei Sätzen paralleler Streifen (21, 22) eines nichtquellenden, nichtharzabsorbierenden Materials übereinander unter Bildung eines Gitters besteht, wobei die Streifen (21, 22) eines jeden Satzes im Abstand voneinander angeordnet sind, um dazwischen einen parallelen Satz von Harzverteilungskanälen zu bilden.

4. Verfahren nach Anspruch 2 oder Anspruch 3, bei dem die parallelen Sätze von Harzverteilungskanälen einander im wesentlichen in rechten Winkeln schneiden.

5. Verfahren nach Anspruch 1, bei dem die Harzverteilungsteile (5, 6) jeweils einen gewirkten oder gewebten Stoff aus einem nichtquellenden, nichtharzabsorbierenden Monofilament umfassen, wobei die Abstandshalter von Bereichen örtlich vermehrter Masse in dem gewirkten oder gewebten Stoff gebildet werden.

6. Verfahren nach einem der Ansprüche 1 bis 5, bei dem ein flexibler Bogen von harzdurchlässigem Material zwischen der Auflage (9) und dem Harzverteilungsteil (5, 6) auf einer Seite oder auf beiden Seiten der Auflage (9) angeordnet wird, um eine Abziehschicht (7, 8) auf einer Seite oder auf beiden Seiten des geformten Verbundwerkstückes zu liefern, und bei dem am Ende des Formverfahrens und nach Entfernung des geformten Verbundwerkstückes aus der Form jene abziehbare Schicht (7, 8) je nachdem von einer Seite oder von beiden Seiten des Verbundwerkstückes abgezogen wird.

7. Verfahren nach einem der Ansprüche 1 bis 6, bei dem das faserverstärkte Harzverbundwerkstück insgesamt ein Bootskörper oder ein Teil desselben ist.

8. Vorrichtung zur Vakuumherstellung faserverstärkter geformter Harzverbundwerkstücke mit
einer Form, die eine Formoberfläche (3) liefert, welche die erwünschte Gestalt des geformten Verbundwerkstückes definiert,
einem fließmittelundurchlässigen flexiblen Deckbogen (1), der über der Formoberfläche (3) positionierbar ist, um dazwischen eine Formhöhlung zu begrenzen,
Einrichtungen (11) zum Abdichten des Umfangs des flexiblen Deckbogens (1) gegen die Formoberfläche (3), um die Formhöhlung abzudichten,
Einrichtungen (4) zum Einspritzen eines härtbaren Harzes in die Formhöhlung zur Imprägnierung einer Auflage (9) von Faserverstärkung, wenn diese in der Formhöhlung über der Formoberfläche (3) positioniert ist,
Einrichtungen (2) zum Anlegen eines Vakuums an die Formhöhlung, um den flexiblen Deckbogen (1) zu der geformten Oberfläche hin zu ziehen und dabei Druck auf das Verbundwerkstück während des Formens und Härtens des Harzes auszuüben und
einem Harzverteilungsteil (5), das in der Formhöhlung zwischen der Auflage (9) und dem flexiblen Deckbogen (1) positionierbar ist und ein sich kreuzendes Netz von im Abstand voneinander angeordneten Harzverteilungskanälen und ein Muster von Abstandshaltern, die dazu dienen, die Auflage (9) im Abstand von dem flexiblen Deckbogen (1) zu halten, liefert,
**dadurch gekennzeichnet**, daß
ein zweites Harzverteilungsteil (6) zwischen der Auflage (9) und der Formoberfläche (3) positionierbar ist, wobei dieses zweite Harzverteilungsteil (6) auch ein sich kreuzendes Netz von im Abstand voneinander angeordneten Harzverteilungskanälen und mehrere Abstandshalter, die dazu dienen, die Auflage (9) im Abstand von der Formoberfläche (3) zu halten, liefert,
die Formoberfläche (3) wenigstens eine Harzverteilungswanne (12; 42) und einen Harzeinlaß (4) zur Aufnahme und Abgabe von Harz in den oder jede Wanne (12; 42) hat und
die Vakuumanlegungseinrichtung wenigsens einen Vakuumauslaß (2) in dem flexiblen Deckbogen (1) umfaßt und so angeordnet ist, daß sie über der Auflage (9) ist, wobei die Anordnung es erlaubt, daß das Harz kontinuierlich, frei und direkt ohne Schwerkraftunterstützung fließt, um die Auflage (9) über ihre gesamte Fläche von der Stelle der Harzeinführung zu dem Umfang der Auflage (9) hin gleichmäßig und vollständig zu imprägnieren.

9. Vorrichtung nach Anspruch 8, bei der jedes der Harzverteilungsteile (5, 6) von einem offenen Netz von einander schneidenden, nichtquellenden, nichtharzabsorbierenden Monofilamenten gebildet wird, die in zwei einander schneidenden parallelen Sätzen (5₂, 5₃; 6₂, 6₃) angeordnet sind, wobei jeder einen parallelen Satz von Harzverteilungskanälen zwischen den Monofilamenten begrenzt und an jeder Schnittstelle der Monofilamente ein erhabener Pfeiler (5₁; 6₁) vorgesehen ist, wobei diese Pfeiler dazu dienen, je nachdem die obere oder untere Oberfläche der Auflage (9) im Abstand von dem flexiblen Deckbogen (1) oder der Formoberfläche (3) zu halten.

10. Vorrichtung nach Anspruch 8, bei der jedes der Harzverteilungsteile (5, 6) von einer gitterartigen Struktur (20) gebildet wird, die aus zwei Sätzen paralleler Streifen (21, 22) eines nichtquellenden, nichtharzabsorbierenden Materials übereinander unter Bildung eines Gitters angeordnet besteht, wobei die Streifen (21, 22) jedes Satzes so voneinander beabstandet sind, daß sie dazwischen einen parallelen Satz von Harzverteilungskanälen bilden.

11. Vorrichtung nach Anspruch 9 oder Anspruch 10, bei der die parallelen Sätze von Harzverteilungskanälen einander im wesentlichen in rechten Winkeln schneiden.

12. Vorrichtung nach Anspruch 8, bei der die Harzverteilungsteile (5, 6) jeweils einen aus einen nichtquellenden, nichtharzabsorbierenden Monofilament gewirkten oder gewebten Stoff umfassen, wobei die Abstandshalter von Flächen örtlich vermehrter Masse in dem gewirkten oder gewebten Stoff gebildet werden.

13. Vorrichtung nach einem der Ansprüche 8 bis 12, welche zusätzlich wenigstens einen und vorzugsweise zwei Bögen (7, 8) von harzdurchlässigem Material umfaßt, das in der Formhöhlung zwischen der Auflage (9) und einem oder beiden Harzverteilungsteilen (5, 6) positionierbar ist, wobei die Bögen (7, 8) von harzdurchlässigem Material aus einem Material bestehen, welches von der Oberfläche des geformten Verbundwerkstückes am Ende des Formverfahrens abziehbar ist.

14. Vorrichtung nach einem der Ansprüche 8 bis 13, bei der die Formhöhlung insgesamt einen Bootskörper oder einen Teil desselben begrenzt.

## Revendications

1. Procédé pour former sous vide des composites en résine renforcés par fibres, qui comprend les opérations consistant à disposer une ou plusieurs couches de matériau de fibres de renforcement sur une surface de moule (3) de sorte à former un matelas (9), placer une feuille de couverture souple imperméable aux liquides (1) sur le matelas (9), sceller périphériquement la feuille de couverture souple (1) à la surface de moule (3) autour du matelas (9), injecter une résine durcissable dans une cavité de moule formée sur une face par la surface de moule (3) et sur l'autre face par la feuille de couverture souple imperméable aux liquides (1) de manière à imprégner le matelas (9) de la résine, et laisser durcir ou faire durcir la résine injectée tout en appliquant un vide sur la cavité de moule, afin d'attirer la feuille de couverture souple (1) sous vide vers la surface de moule (3) et d'appliquer une pression sur le composite durant l'opération de durcissement, dans lequel est situé dans la cavité de moule entre le matelas (9) et la feuille de couverture souple (1) un élément de répartition de résine (5) créant un réseau de canaux de répartition de résine entrecroisés, espacés, et créant entre les canaux de répartition de résine entrecroisés, espacés, une pluralité d'écarteurs qui servent à espacer le matelas (9) de la feuille de couverture souple (1),
caractérisé en ce qu'un second élément de répartition de résine (6) est disposé entre le matelas (9) et la surface de moule (3), le second élément de répartition de résine (6) créant également un réseau de canaux de répartition de résine entrecroisés, espacés, et une pluralité d'écarteurs qui servent à espacer le matelas (9) de la surface de moule (3), en ce que la surface de moule (3) comporte au moins une gorge de répartition de résine (12; 42) et une entrée de résine (4) pour recevoir et distribuer la résine dans la gorge ou chaque gorge (12; 42) et en ce que la feuille de couverture souple (1) comporte au moins une sortie de vide (2) agencée pour se trouver au-dessus du matelas (9), l'agencement permettant à la résine de s'écouler en continu, librement et directement sans l'aide de la gravité pour imprégner uniformément et complètement le matelas (9) sur toute sa surface de l'emplacement de l'introduction de la résine jusqu'à la périphérie du matelas (9).

2. Procédé selon la revendication 1, dans lequel chacun des éléments de répartition de résine (5, 6) est constitué par un réseau ouvert de monofilaments entrecroisés n'absorbant pas la résine, ne gonflant pas, agencés en deux ensembles parallèles s'entrecroisant (5₂, 5₃; 6₂, 6₃), chacun définissant un ensemble de canaux de répartition de résine parallèles entre les monofilaments, à chaque intersection desdits monofilaments étant prévu un plot en projection (5₁, 6₁), lesquels plots servent à espacer la surface supérieure ou inférieure, selon les cas, du matelas (9) de la feuille de couverture souple (1) ou de la surface de moule (3).

3. Procédé selon la revendication 1, dans lequel chacun des éléments de répartition de résine (5, 6) est constitué par une structure en forme de grille (20) consistant en deux ensembles de lames parallèles (21, 22) d'un matériau n'absorbant pas la résine, ne gonflant pas, superposés pour former une grille, les lames (21, 22) de chaque ensemble étant espacées les unes des autres pour former entre elles un ensemble de canaux de répartition de résine parallèles.

4. Procédé selon la revendication 2 ou 3, dans lequel les ensembles parallèles de canaux de répartition de résine s'entrecroisent sensiblement à angle droit.

5. Procédé selon la revendication 1, dans lequel les éléments de répartition de résine (5, 6) comprennent chacun une étoffe tricotée ou tissée à partir d'un monofilament n'absorbant pas la résine, ne gonflant pas, lesdits écarteurs étant constitués par des régions de volume localement accru dans l'étoffe tricotée ou tissée.

6. Procédé selon l'une quelconque des revendications 1 à 5, dans lequel une feuille souple de matériau perméable à la résine est positionnée entre le matelas (9) et l'élément de répartition de résine (5, 6) sur une face ou les deux faces du matelas (9) pour former une couche pelable (7, 8) sur une face ou les deux faces du composite moulé, et dans lequel à la fin de l'opération de moulage, et lors de l'extraction du composite moulé du moule, ladite couche pelable (7, 8) est pelée de la face ou des deux faces du composite, selon les cas.

7. Procédé selon l'une quelconque des revendications 1 à 6, dans lequel le composite en résine renforcé par fibres constitue tout ou partie de la coque d'un bateau.

8. Dispositif pour former sous vide des composites en résine moulés, renforcés par fibres, comprenant :
un moule constituant une surface de moule (3) définissant la forme souhaitée du composite moulé;
une feuille de couverture souple imperméable aux liquides (1) pouvant être positionnée sur la surface de moule (3) pour définir une cavité de moule entre elles;
un moyen (11) pour sceller la périphérie de la feuille de couverture souple (1) à la surface de moule (3) afin de fermer hermétiquement la cavité de moule;
un moyen (4) pour injecter une résine durcissable dans la cavité de moule afin d'imprégner un matelas (9) de matériau de fibres de renforcement lorsqu'il est positionné dans la cavité de moule sur la surface de moule (3);
un moyen (2) pour appliquer un vide sur la cavité de moule afin d'attirer la feuille de couverture souple (1) vers la surface de moule et donc appliquer une pression sur le composite durant le moulage et le durcissement de la résine; et
un élément de répartition de résine (5) pouvant être positionné dans la cavité de moule entre le matelas (9) et la feuille de couverture souple (1), et créant un réseau de canaux de répartition de résine entrecroisés, espacés, et une pluralité d'écarteurs servant à espacer le matelas (9) de la feuille de couverture souple (1),
caractérisé en ce que :
un second élément de répartition de résine (6) peut être positionné entre le matelas (9) et la surface de moule (3), le second élément de répartition de résine (6) créant également un réseau de canaux de répartition de résine entrecroisés, espacés, et une pluralité d'écarteurs qui servent à espacer le matelas (9) de la surface de moule (3);
la surface de moule (3) comporte au moins une gorge de répartition de résine (12; 42) et une entrée de résine (4) pour recevoir et distribuer la résine dans la gorge ou chaque gorge (12; 42); et
le moyen d'application de vide comprend au moins une sortie de vide (2) dans la feuille de couverture souple (1) et agencée pour se trouver au-dessus du matelas (9), l'agencement permettant à la résine de s'écouler en continu, librement et directement sans l'aide de la gravité pour imprégner uniformément et complètement le matelas (9) sur toute sa surface de l'emplacement de l'introduction de la résine jusqu'à la périphérie du matelas (9).

9. Dispositif selon la revendication 8, dans lequel chacun des éléments de répartition de résine (5, 6) est constitué par un réseau ouvert de monofilaments entrecroisés n'absorbant pas la résine, ne gonflant pas, agencés en deux ensembles parallèles s'entrecroisant (5₂, 5₃; 6₂, 6₃), chacun définissant un ensemble de canaux de répartition de résine parallèles entre les monofilaments, à chaque intersection desdits monofilaments étant prévu un plot en projection (5₁, 6₁), lesquels plots servent à espacer la surface supérieure ou inférieure, selon les cas, du matelas (9) de la feuille de couverture souple (1) ou de la surface de moule (3).

10. Dispositif selon la revendication 8, dans lequel chacun des éléments de répartition de résine (5, 6) est constitué par une structure en forme de grille (20) consistant en deux ensembles de lames parallèles (21, 22) d'un matériau n'absorbant pas la résine, ne gonflant pas, superposés pour former une grille, les lames (21, 22) de chaque ensemble étant espacées les unes des autres pour former entre elles un ensemble de canaux de répartition de résine parallèles.

11. Dispositif selon la revendication 9 ou 10, dans lequel les ensembles parallèles de canaux de répartition de résine s'entrecroisent sensiblement à angle droit.

12. Dispositif selon la revendication 8, dans lequel les éléments de répartition de résine (5, 6) comprennent chacun une étoffe tricotée ou tissée à partir d'un monofilament n'absorbant pas la résine, ne gonflant pas, lesdits écarteurs étant constitués par des régions de volume localement accru dans l'étoffe tricotée ou tissée.

13. Dispositif selon l'une quelconque des revendications 8 à 12, qui comprend en outre au moins une, et, de préférence, deux feuilles (7, 8) de matériau perméable à la résine pouvant être positionnées dans la cavité de moule entre le matelas (9) et un élément ou les deux éléments de répartition de résine (5, 6), les feuilles (7, 8) de matériau perméable à la résine étant faites d'un matériau qui peut être pelé de la surface du composite moulé à la fin de l'opération de moulage.

14. Dispositif selon l'une quelconque des revendications 8 à 13, dans lequel la cavité de moule forme tout ou partie de la coque d'un bateau.
